# EUROPÄISCHE PATENTSCHRIFT

(11) **EP 1 771 360 B1**
(45) Veröffentlichungstag und Bekanntmachung des Hinweises auf die Patenterteilung: **18.05.2016**
(21) Anmeldenummer: 05768672.7
(22) Anmeldetag: 16.07.2005
(51) Int. Cl.: B65G 17/26

(54) **FÖRDEREINRICHTUNG**
TRANSPORT DEVICE
DISPOSITIF DE TRANSPORT

(30) Priorität: 17.07.2004 DE 102004034570
(43) Veröffentlichungstag der Anmeldung: 11.04.2007
(73) Patentinhaber: SPG Packaging Systems GmbH, 46535 Dinslaken (DE)
(72) Erfinder: KANZ, Andreas, 72461 Albstadt (DE)
(74) Vertreter: Kohler Schmid Möbus Patentanwälte
(86) Internationale Anmeldenummer: PCT/IB2005/002028
(87) Internationale Veröffentlichungsnummer: WO 2006/008634

(56) Entgegenhaltungen:
- EP-A- 0 335 738
- WO-A-02/10018
- DE-A1- 4 114 169
- US-A- 5 337 887
- US-A1- 2004 023 769

## Beschreibung

Die Erfindung betrifft eine Fördereinrichtung, insbesondere einer Verpackungsmaschine, mit einem ersten und einem zweiten Mitnehmer für Packstücke, die durch Zugmittel entlang einer Förderstrecke und einer unterhalb davon befindlichen Rückführstrecke bewegbar sind, gemäß dem Oberbegriff von Anspruch 1.

Aus der WO 02/10018 A1 ist eine Fördereinrichtung für eine Verpackungsmaschine bekannt, die zwei unabhängig voneinander angetriebene Zugmittel aufweist. An den Zugmitteln sind jeweils Mitnehmer fest angeordnet.

Eine Fördereinrichtung ist beispielsweise aus der DE 36 08 580 A1 bekannt geworden. Die darin beschriebene Kettenfördervorrichtung weist in gleicher Ausrichtung verbleibende Mitnehmer auf, die mit in Förderrichtung gegeneinander versetzten Achsen mit zwei mit größerem Abstand parallel zueinander verlaufenden Förderketten gekoppelt sind. Die Förderketten sind im Bereich der Förderstrecke und im Bereich einer Rückführstrecke in Führungsschienen abgestützt.

Dies bedeutet, dass die Ketten zum einen für den Antrieb der Mitnehmer und zum anderen als Führung für den Mitnehmer verwendet werden. Bei erhöhten Anforderungen an die Kettenfördervorrichtung unterliegen daher sowohl die Ketten als auch die Führungsschienen einem erhöhten Verschleiß. Die Ketten und die Führungsschienen müssen folglich häufig gewechselt werden. Weiterhin ist eine derartige Fördervorrichtung relativ unflexibel, da die Mitnehmer über die Ketten miteinander gekoppelt sind.

Aufgabe der vorliegenden Erfindung ist es deshalb, eine Fördereinrichtung bereitzustellen, bei der der Verschleiß des Zugmittels reduziert ist.

Gelöst wird diese Aufgabe durch eine Fördereinrichtung mit den Merkmalen des Anspruchs 1. Dies bedeutet, dass der erste und zweite Mitnehmer unabhängig voneinander betrieben werden können. Insbesondere können sie unterschiedlich schnell beschleunigt werden, unterschiedliche Geschwindigkeiten aufweisen und unabhängig voneinander bestimmte Positionen entlang der Förder- bzw. Rückführstrecke anfahren. Als Zugmittel kommen beispielsweise Ketten oder Zahnriemen in Frage. Es sind jedoch auch weitere endlose, umlaufende Zugmittel denkbar. Besonders vorteilhaft ist es, wenn die Fördereinrichtung bei einer Inline-Ausricht- und Umreifungsmaschine (Inline Squaring and Bundling (ISB)-Maschine) eingesetzt wird, d. h. bei einer Verpackungsmaschine, bei der die Packstücke in Förderrichtung umreift, umschnürt und mit Banderolen oder dergleichen umgeben werden.

Der erste und zweite Mitnehmer sind jeweils an einem Schlitten angeordnet. Diese Maßnahme ermöglicht die Entkopplung des Zugmittels und der Führung des Mitnehmers. Insbesondere muss das Zugmittel nicht mehr zur Führung des Mitnehmers verwendet werden. Dadurch wird der Verschleiß des Zugmittels reduziert.

Die Schlitten weisen jeweils eine Linearführung auf, entlang der die Mitnehmer von einer unteren in eine obere Position und umgekehrt bewegbar sind. Durch diese Maßnahme kann die Fördereinrichtung größeren Belastungen unterzogen werden. Der Verschleiß der Führung wird auf diese Weise reduziert. Dadurch, dass der Mitnehmer relativ zum Schlitten beweglich ist, muss der Schlitten für die Bewegung des Mitnehmers entlang der Rückführstrecke nicht abgesenkt werden. Es ist ausreichend, wenn der jeweilige Mitnehmer abgesenkt wird.

Bei einer Ausgestaltung der Erfindung kann vorgesehen sein, dass für jeden Schlitten eine horizontale Linearführung vorgesehen ist. Dies bedeutet, dass der Schlitten lediglich eine horizontale Bewegung ausführen muss. Die Bewegung der Schlitten entlang der Förderstrecke und entlang der Rückführstrecke kann durch die Kombination von zwei Linearführungen erreicht werden. Die am Schlitten vorgesehene Linearführung kann dabei im Wesentlichen vertikal ausgerichtet sein. Eine schräge Ausrichtung zur Vertikalen ist jedoch auch denkbar und für manche Anwendungen sogar bevorzugt. Vorteilhafterweise sind die Linearführungen als Profil-Linearführungen, insbesondere als Prismenlinearführungen, ausgebildet. Derartige Linearführungen können Drehmomente besonders gut aufnehmen.

Zur Aufnahme des durch den Schlitten, insbesondere durch dessen Eigengewicht bzw. das Gewicht des Mitnehmers, verursachten Drehmoments ist es ausreichend, eine Profillinearführung für jeden Schlitten vorzusehen. Würden Rundführungen verwendet, so wären mindestens zwei parallel zueinander verlaufenden Rundführungen notwendig, um die auftretenden Drehmomente aufzunehmen. Außerdem wird die Montage vereinfacht, da eine aufwändige Ausrichtung, wie das bei Rundführungen notwendig wäre, nicht erforderlich ist.

Bei einer bevorzugten Ausgestaltung der Erfindung ist an den Zugmitteln jeweils zumindest ein Mitnahmemittel für den zugeordneten Mitnehmer vorgesehen. Das Mitnahmemittel kann an dem Mitnehmer angreifen und dadurch den Mitnehmer und den Schlitten bewegen. Das Zugmittel kann beispielsweise durch vier Räder oder Rollen umgelenkt werden, sodass das an dem Zugmittel befestigte Mitnahmemittel entlang der Förderstrecke den Mitnehmer in einer oberen Position hält und den Mitnehmer zusammen mit dem Schlitten entlang der Förderstrecke bewegt. Am Ende der Förderstrecke wird das Zugmittel nach unten umgelenkt, sodass der Schlitten im Wesentlichen in seiner Position gehalten wird und der Mitnehmer nach unten bewegt wird. Nach Erreichen der unteren Position wird das Zugmittel erneut umgelenkt, sodass der Mitnehmer in einer unteren Position gehalten wird und der Schlitten zusammen mit dem Mitnehmer entlang der Rückführstrecke bewegt wird. Beim Erreichen eines weiteren Umlenkpunktes wird das Mitnahmemittel zusammen mit dem Zugmittel nach oben bewegt, wobei es den Mitnehmer in eine obere Position bewegt und der Schlitten im Wesentlichen in seiner Position gehalten wird.

Die Antriebe können als individuell ansteuerbare Asynchron-, Servo- oder Stellmotoren ausgebildet sein. Je nach Anforderung sind unterschiedliche Antriebe wählbar. Dadurch, dass sie individuell ansteuerbar sind, können sie unabhängig voneinander betrieben werden. Die Fördereinrichtung erhält dadurch eine große Flexibilität. Durch die individuelle unabhängige Ansteuerung der Antriebe ist es nicht nur möglich, den ersten Mitnehmer entlang der Förderstrecke zu bewegen, solange der zweite Mitnehmer entlang der Rückführstrecke bewegt wird, sondern ist es beispielsweise möglich, den einen Mitnehmer mit einer ersten Geschwindigkeit entlang der Förderstrecke zu bewegen und den zweiten Mitnehmer schneller entlang der Rückführstrecke zu bewegen, sodass dieser bereits in einer Ausgangsposition wartet, bis der andere Mitnehmer die Endposition der Förderstrecke erreicht hat.

Bei einer Ausgestaltung der Erfindung kann vorgesehen sein, dass die Mitnehmer nebeneinander angeordnet sind. Insbesondere bei großen zu fördernden Packstücken ist es dadurch möglich, beide Mitnehmer gleichzeitig zum Fördern der Packstücke einzusetzen. Die Mitnehmer können daher gleichsinnig und gleichzeitig arbeiten. Die Fördereinrichtung ist dadurch erheblich flexibler als eine Fördereinrichtung des Stands der Technik, bei der die Bewegung der Mitnehmer gekoppelt ist und diese hintereinander entlang derselben Bahnen bewegt werden. Im Gegensatz dazu ist es erfindungsgemäß möglich, die Mitnehmer in parallelen Bahnen zu bewegen.

Wenn die Fördereinrichtung selbsttragend ausgebildet ist, ist kein fester Einbau der Fördereinrichtung beispielsweise in eine Verarbeitungsstation notwendig. Außerdem hat die Fördereinrichtung eine hohe Stabilität.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Ein Ausführungsbeispiel ist in der stark schematisierten Zeichnung dargestellt und wird in der nachfolgenden Beschreibung erläutert. Dabei zeigen:
- Fig. 1: eine perspektivische. Ansicht einer Fördereinrichtung;
- Fig. 2: eine perspektivische Ansicht einer Hälfte der Fördereinrichtung.

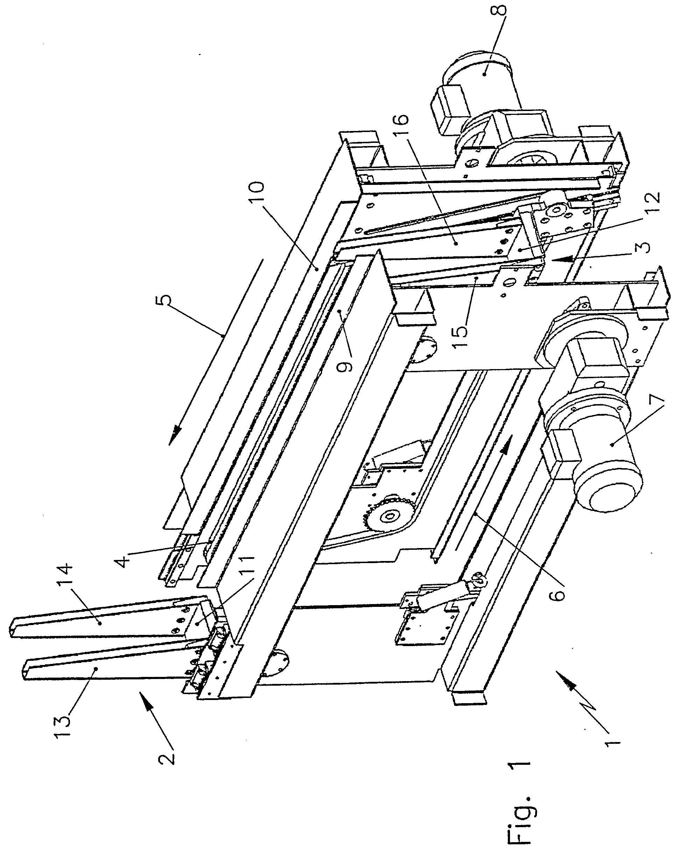

In der Fig. 1 ist eine selbsttragende Fördereinrichtung 1 dargestellt, die einen ersten und einen zweiten Mitnehmer 2, 3 aufweist. Die Fördereinrichtung 1 weist beidseits einer Mittellängsebene dieselben Elemente auf und ist bezogen auf die Mittellängsebene im Wesentlichen spiegelbildlich aufgebaut. Die Mitnehmer 2, 3 sind jeweils durch ein Zugmittel 4 (es ist nur das Zugmittel des Mitnehmers 3 sichtbar) entlang einer Förderstrecke 5 in einer oberen Position bewegbar. In einer unteren Position sind sie entlang einer Rückführstrecke 6 bewegbar. Jedem Mitnehmer 2, 3 ist ein Zugmittel 4 und ein Antrieb 7, 8 zugeordnet. Die Antriebe 7, 8 sind ansteuerbar und unabhängig voneinander betreibbar. Im in der Fig. 1 dargestellten Ausführungsbeispiel ist der Spalt zwischen den Leisten 9, 10 auf die Breite eines Mitnehmers 2, 3 angepasst. Dies bedeutet, dass die Mitnehmer 2, 3 nicht nebeneinander angeordnet werden können, sodass jeweils nur ein Mitnehmer 2, 3 entlang der Förderstrecke 5 bewegbar ist oder die Mitnehmer 2, 3 hintereinander auf der Förderstrecke 5 bewegbar sind. Es ist jedoch denkbar, die Fördereinrichtung 1 in der Breite auseinander zu ziehen, sodass der Spalt zwischen den Leisten 9, 10 vergrößert wird und die Mitnehmer 2, 3 nebeneinander angeordnet werden können. Somit können sie auch synchron entlang der Förderstrecke 5 bewegt werden.

Auf nicht dargestellten Laufrollen, die im Bereich der Leisten 9, 10 angeordnet sein können, können zur Verpackung bestimmte Packstücke gestapelt werden, die dann mittels der Mitnehmer 2, 3 entlang der Förderstrecke 5 beispielsweise einem nicht dargestellten Verschnüraggregat zugeführt werden können. Die Mitnehmer 2, 3 weisen von einer Grundplatte 11, 12 abstehende parallele Mitnahmestege 13, 14 bzw. 15, 16 auf.

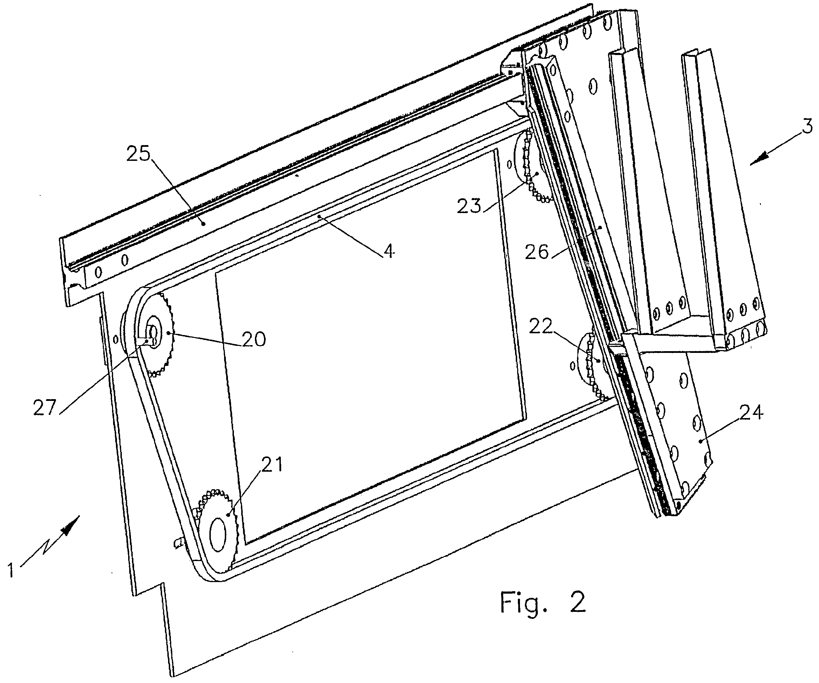

In der Fig. 2 ist eine perspektivische Ansicht einer Hälfte der Fördereinrichtung 1 dargestellt. Das Zugmittel 4 ist im Ausführungsbeispiel als Kette ausgebildet und wird durch vier als Kettenräder ausgebildete Umlenkeinrichtungen 20 bis 23 umgelenkt. Ein Schlitten 24 ist entlang einer Linearführung 25 horizontal bewegbar. Der Schlitten 24 weist weiterhin eine Linearführung 26 auf, die schräg zur Vertikalen angeordnet ist und entlang der der Mitnehmer 3 von einer unteren in eine obere Position und umgekehrt bewegbar ist. An dem Zugmittel 4 zumindest ist ein Mitnahmemittel 27 angeordnet, welches mit dem Mitnehmer 3 zusammenwirken kann und im Ausführungsbeispiel als Stift ausgebildet ist. Wenn das Mitnahmemittel 27 von der Umlenkeinrichtung 20 zur Umlenkeinrichtung 21 bewegt wird, so bewegt es den Mitnehmer 3 von einer oberen in eine untere Position. Auf der Strecke zwischen der Umlenkeinrichtung 21 und der Umlenkeinrichtung 22 nimmt das Mitnahmemittel 27 nicht nur den Mitnehmer 3 entlang der Rückführstrecke mit, sondern bewegt außerdem den Schlitten 24 entlang der Linearführung. Dabei wird der Mitnehmer 3 durch das Mitnahmemittel 27 in der unteren Position gehalten. Nach Erreichen der Umlenkeinrichtung 22 wird der Mitnehmer 3 durch das Mitnahmemittel 27 entlang der Linearführung 26 in eine obere Position transportiert. Die Position des Schlittens 24 ändert sich dabei allenfalls unwesentlich. Anschließend, wenn sich das Mitnahmemittel 27 von der Umlenkeinrichtung 23 zur Umlenkeinrichtung 20 bewegt, wird zusätzlich zum Mitnehmer 3 auch der Schlitten 24 entlang der Förderstrecke und damit entlang der Linearführung 25 mitgenommen. Während im Stand der Technik zumindest zwei horizontale Führungen für das Zugmittel 4 notwendig sind, ist im Ausführungsbeispiel lediglich eine horizontale Führung und eine im Wesentlichen vertikale Führung notwendig.

## Patentansprüche

1. Fördereinrichtung (1), insbesondere einer Verpackungsmaschine, mit einem ersten und einem zweiten Mitnehmer (2, 3) für Packstücke, die durch Zugmittel (4) entlang einer Förderstrecke (5) und einer unterhalb davon befindlichen Rückführstrecke (6) bewegbar sind, wobei dem ersten Mitnehmer (2) ein erstes von einem ersten Antrieb (7) angetriebenes Zugmittel (4) und dem zweiten Mitnehmer (3) ein zweites von einem zweiten Antrieb (8) angetriebenes und von dem ersten Zugmittel (4) entkoppeltes Zugmittel (4) zugeordnet ist, **dadurch gekennzeichnet, dass** der erste und zweite Mitnehmer (2, 3) jeweils an einem Schlitten (24) relativ zu diesem bewegbar angeordnet sind, wobei die Schlitten (24) jeweils eine Linearführung (26) aufweisen, entlang der die Mitnehmer (2, 3) von einer unteren in eine obere Position und umgekehrt bewegbar sind.

2. Fördereinrichtung nach Anspruch 1,
**dadurch gekennzeichnet, dass** für jeden Schlitten (24) eine horizontale Linearführung (25) vorgesehen ist.

3. Fördereinrichtung nach einem der Ansprüche 1 oder 2,
**dadurch gekennzeichnet, dass** die Linearführungen (25, 26) als Profil- Linearführungen, insbesondere als PrismenLinearführungen, ausgebildet sind.

4. Fördereinrichtung nach einem der vorhergehenden Ansprüche, **dadurch gekennzeichnet, dass** an den Zugmitteln (4) jeweils zumindest ein Mitnahmemittel (27) für den zugeordneten Mitnehmer (2, 3) vorgesehen ist.

5. Fördereinrichtung nach einem der vorhergehenden Ansprüche, **dadurch gekennzeichnet, dass** die Antriebe (7, 8) als individuell ansteuerbare Asynchron-, Servo- oder Stellmotoren ausgebildet sind.

6. Fördereinrichtung nach einem der vorhergehenden Ansprüche, **dadurch gekennzeichnet, dass** die Mitnehmer (7, 8) nebeneinander angeordnet sind.

7. Fördereinrichtung nach einem der vorhergehenden Ansprüche, **dadurch gekennzeichnet, dass** die Fördereinrichtung (1) selbsttragend ausgebildet ist.

## Claims

1. Conveying device (1), in particular of a packaging machine, comprising a first and a second pusher (2, 3) for packages that can be moved along a conveying section (5) and a return section (6) situated therebelow by means of traction mechanisms (4), a first traction mechanism (4) driven by a first drive (7) being associated with the first pusher (2) and a second traction mechanism (4) driven by a second drive (8) and decoupled from the first traction mechanism (4) being associated with the second pusher (3), **characterised in that** the first and second pushers (2, 3) are each arranged on respective carriages (24) in such a manner that they are movable relative thereto, the carriages (24) each having a linear guide (26) along which the pushers (2, 3) can be moved from a lower position to an upper position and vice versa.

2. Conveying device according to claim 1, **characterised in that** each carriage (24) is provided with a horizontal linear guide (25).

3. Conveying device according to either of claims 1 or 2, **characterised in that** the linear guides (25, 26) are designed as shaped linear guides, in particular as prism-shaped linear guides.

4. Conveying device according to one of the preceding claims, **characterised in that** at least one driving means (27) is provided for each of the associated pushers (2, 3) on the traction mechanisms (4).

5. Conveying device according to one of the preceding claims, **characterised in that** the drives (7, 8) are designed as individually actuated asynchronous, servo or actuator motors.

6. Conveying device according to one of the preceding claims, **characterised in that** the pushers (7, 8) are arranged alongside one another.

7. Conveying device according to one of the preceding claims, **characterised in that** the conveying device (1) is self-supporting.

## Revendications

1. Système de convoyage (1), en particulier d'une machine d'emballage, comprenant un premier et un second élément d'entraînement (2, 3) pour des paquets individuels, qui sont déplaçables grâce à des moyens de traction (4) le long d'un trajet de convoyage (5) et d'un trajet de retour (6) qui se trouve au-dessous de celui-ci, dans lequel un premier moyen de traction (4) entraîné par un premier entraînement (7) est associé au premier élément d'entraînement (2), et un second moyen de traction (4) entraîné par un second entraînement (8) et découplé du premier moyen de traction (4) est associé au second élément d'entraînement (3), **caractérisé en ce que** le premier et le second moyen d'entraînement (2, 3) sont respectivement agencés sur un chariot (24) de manière déplaçable par rapport à celui-ci, et les chariots (24) comprennent chacun un guidage linéaire (26) le long duquel les éléments d'entraînement (2, 3) sont déplaçables depuis une position inférieure jusque dans une position supérieure et inversement.

2. Système de convoyage selon la revendication 1, **caractérisé en ce qu'**il est prévu un guidage linéaire horizontal (25) pour chaque chariot.

3. Système de convoyage selon l'une des revendications 1 ou 2, **caractérisé en ce que** les guidages linéaires (25, 26) sont réalisés sous forme de guidages linéaires à profilés, en particulier sous la forme de guidages linéaires à prismes.

4. Système de convoyage selon l'une des revendications précédentes, **caractérisé en ce qu'**au moins un moyen d'entraînement respectif (27) pour l'élément d'entraînement associé (2, 3) est prévu sur les moyens de traction (4).

5. Système de convoyage selon l'une des revendications précédentes, **caractérisé en ce que** les entraînements (7, 8) sont réalisés sous forme de moteurs asynchrones, de servomoteurs ou de moteurs de positionnement susceptibles d'être pilotés individuellement.

6. Système de convoyage selon l'une des revendications précédentes, **caractérisé en ce que** les éléments d'entraînement (7, 8) sont agencés les uns à côté des autres.

7. Système de convoyage selon l'une des revendications précédentes, **caractérisé en ce que** le système de convoyage (1) est réalisé de manière autoportante.
